# EUROPÄISCHE PATENTANMELDUNG

(11) **EP 2 201 849 A1**
(43) Veröffentlichungstag der Anmeldung: **30.06.2010**
(21) Anmeldenummer: 08172780.2
(22) Anmeldetag: 23.12.2008
(51) Int. Cl.: A23P 1/08, A21C 3/06, A22C 7/00

(54) **Aufwickelvorrichtung für flache, wickelfähige Lebensmittel**

(71) Anmelder: Schmitz, Wolfgang, 50127 Bergheim (DE)
(72) Erfinder: Schmitz, Wolfgang, 50127 Bergheim (DE)
(74) Vertreter: von Kreisler Selting Werner

(57) **Zusammenfassung**

Bei einer Aufwickelvorrichtung (1) für flachen, wickelfähige Lebensmittel (24), mit einer Transporteinrichtung (7) zum Zuführen des Lebensmittels (24) zu einer Wickeleinrichtung, die um eine orthogonal zur Förderrichtung (A) und parallel zur Transportfläche (13) einer Transporteinrichtung (7) verlaufenden Achse (19) rotierbar ist, ist vorgesehen, dass die Wickeleinrichtung mindestens eine Gabel (21) mit einem freien Ende und mit zwei Zinken (20,22) aufweist, die einen vorbestimmten bzw. voreingestellten Abstand zueinander aufweisend, wobei die obere Zinke (20) in Ausgangsstellung einen bezogen auf das flache Lebensmittel (24) orthogonalen Mindestabstand von der unteren Zinke (22) aufweist, der größer als die Dicke des Lebensmittels (24) ist.

## Beschreibung

Die Erfindung betrifft eine Aufwickelvorrichtung für flache, wickelfähige Lebensmittel sowie ein Verfahren zum Aufwickeln flacher Lebensmittel nach dem Oberbegriff der Ansprüche 1 und 9.

Flache, wickelfähige Lebensmittel, insbesondere Rouladen werden meistens mit der Hand aufgewickelt. Es existieren jedoch auch einige Vorrichtungen und Verfahren zur industriellen Herstellung von aufgewickelten Lebensmitteln. Bei diesen Aufwickelverfahren wird das flache Lebensmittel mittels einer Transporteinrichtung einer Wickeleinrichtung zugeführt, die das Lebensmittel aufwickelt. Die Wickeleinrichtung besteht häufig aus einem Rollband, welches zu einer im Durchmesser veränderlichen, rinnenförmigen Tasche ausgebildet wird, so dass das aufzuwickelnde Lebensmittel aufgewickelt wird. Während sich das eingerollte Lebensmittel in der Tasche befindet, erfolgt eine Fixierung des gerollten Lebensmittels mit anschließendem Ausstoß des Lebensmittels.

Dies ist jedoch ein kompliziertes und aufwendiges Aufwickelverfahren. Ein weiterer Nachteil ist, dass das Lebensmittel nicht ausreichend straff aufgewickelt werden kann.

Der Erfindung liegt daher die Aufgabe zugrunde, eine Aufwickelvorrichtung sowie ein Aufwickelverfahren zu schaffen, das einfach ist und bei der die Lebensmittel straff aufgewickelt werden können.

Zur Lösung dieser Aufgabe dienen die Merkmale der Ansprüche 1 und 9.

Die Erfindung sieht in vorteilhafter Weise vor, dass bei einer Aufwickelvorrichtung für flache, wickelfähige Lebensmittel mit einer Transporteinrichtung zum Zuführen des Lebensmittels zu einer Wickeleinrichtung, die um eine orthogonal zur Förderrichtung und parallel zur Transportfläche einer Transporteinrichtung verlaufenden Achse rotierbar ist, die Wickeleinrichtung mindestens eine Gabel mit einem freien Ende und mit zwei Zinken aufweist, die einen vorbestimmten bzw. voreingestellten Abstand zueinander aufweisen, wobei die obere Zinke in Ausgangsstellung einen bezogen auf das flache Lebensmittel orthogonalen Mindestabstand von der unteren Zinke aufweist, der größer als die Dicke des Lebensmittels ist.

Die Aufwickelvorrichtung hat den Vorteil, dass sie wenige Teile aufweist und einfach und kostengünstig herstellbar ist. Ein weiterer Vorteil ist, dass das aufzuwickelnde Lebensmittel mit Hilfe der Gabel straff aufgewickelt werden kann.

Die zwei Zinken können einen zum freien Ende der Gabel konisch zunehmenden Abstand voneinander haben.

Die Transporteinrichtung kann eine Grundplatte und eine Einschiebeeinrichtung aufweisen, wobei die Einschiebeeinrichtung in Bezug auf die Grundplatte in und entgegen der Förderrichtung verschiebbar ist.

Die Einschiebeeinrichtung kann automatisch oder manuell verschiebbar sein. Die Einschiebeeinrichtung kann ferner als Transportfläche mindestens ein Förderband aufweisen. Alternativ kann, wenn keine Einschiebeeinrichtung verwendet wird, die Grundplatte als Transportfläche mindestens ein Förderband aufweisen.

Die Einschiebeeinrichtung kann zumindest teilweise zwischen die obere und die untere Zinke einschiebbar sein.

Der orthogonale Mindestabstand zwischen oberer und unterer Zinke kann größer sein als die gemeinsame Dicke des Lebensmittels und des zwischen obere und untere Zinke einschiebbaren Teils der Einschiebeinrichtung. Wenn keine Einschiebeeinrichtung verwendet wird, kann der orthogonale Mindestabstand zwischen oberer und unterer Zinke größer sein als die Dicke des Lebensmittels.

Die Ausstoßeinrichtung kann das aufgewickelte Lebensmittel von der Gabel abschieben.

Ein Verfahren zum Aufwickeln von flachen Lebensmittel kann die folgenden Schritte aufweisen:
- Auflegen eines Lebensmittels auf eine eine Transportfläche aufweisende Transporteinrichtung,
- Transportieren des Lebensmittels mittels der Transporteinrichtung zwischen eine Gabel mit zwei Zinken zum Aufwickeln des Lebensmittels, wobei eine Gabel mit einem vorbestimmten bzw. voreingestellten Abstand der Zinken zueinander verwendet wird und wobei für die Ausgangsstellung die obere Zinke auf einen bezogen auf das flache Lebensmittel orthogonalen Mindestabstand von der unteren Zinke eingestellt wird, der zumindest größer als die Dicke des Lebensmittels ist,
- Rotieren der Gabel um eine orthogonal zur Förderrichtung und parallel zur Transportfläche verlaufenden Achse, wobei das Lebensmittel dabei straff auf die Gabel aufgewickelt wird.

Das Lebensmittel kann ca. 5 bis 6 mal rotiert werden. Das Lebensmittel kann vor dem Rotieren automatisch mit einer Füllung belegt belegt werden.

Das Lebensmittel kann nach dem Rotieren ausgestoßen und dann in ein Netz verpackt werden.

Im Folgenden werden unter Bezugnahme auf die Zeichnungen Ausführungsbeispiele der Erfindung näher erläutert.

Es zeigen schematisch:
- Fig. 1: eine perspektivische Ansicht eines ersten Ausführungsbeispiels,
- Fig. 2: das Ausführungsbeispiel aus Figur 1 mit zwischen den Zinken angeord- netem Lebensmittel,
- Fig. 3: das Ausführungsbeispiel aus Figur 1 und Figur 2 mit hochgeschwenkter Gabel,
- Fig. 4: ein zweites Ausführungsbeispiel,
- Fig. 5: das Ausführungsbeispiel aus Figur 4 mit zwischen den Zinken angeord- netem Lebensmittel,
- Fig. 6.: ein drittes Ausführungsbeispiel, und
- Fig. 7: das Ausführungsbeispiel aus Fig. 6 mit hochgeschwenkter Gabel.

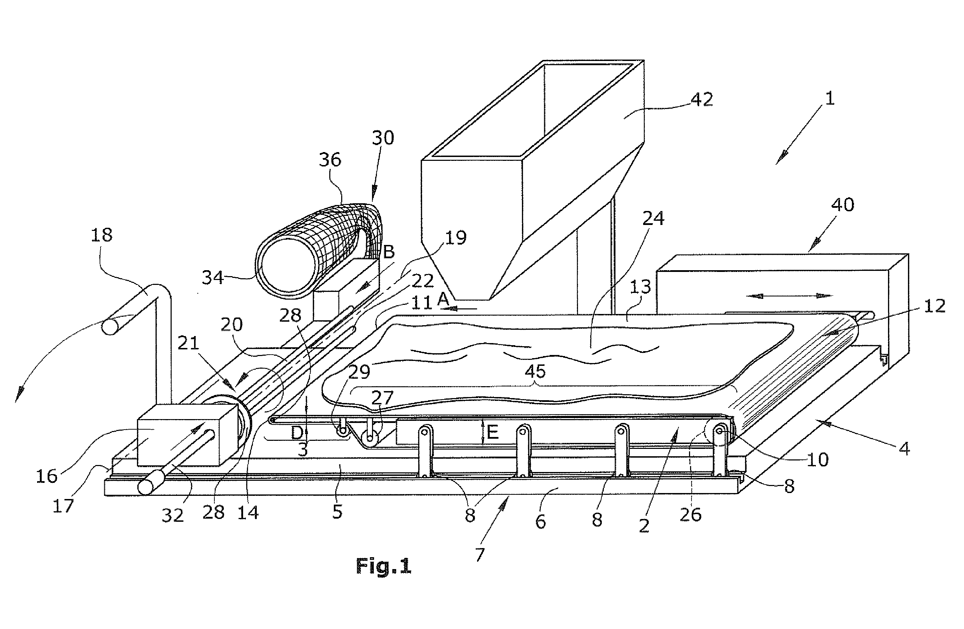

Figur 1 zeigt eine perspektivische Ansicht einer Aufwickelvorrichtung 1. Die Aufwickelvorrichtung 1 weist eine Transporteinrichtung 7 auf. Die Transporteinrichtung 7 weist eine Grundplatte 4 auf. An den Längsseiten 5 der Grundplatte 4 sind Schienen 6 angeordnet. Oberhalb der Grundplatte 4 ist eine Einschiebeeinrichtung 2 angeordnet, die in Bezug auf die Grundplatte 4 in und entgegen der Förderrichtung A verschiebbar ist.

Die Einschiebeeinrichtung 2 weist ein Förderband 12 auf, welches durch ein Motor antreibbar ist. Der Motor kann im Inneren der Einschiebeeinrichtung 2 angeordnet sein. Das Förderband 12 ist um Umlenkrollen 26, 27, 28, 29 der Einschiebeeinrichtung 2 umgelenkt. Das Förderband 12 der Einschiebeeinrichtung 2 weist eine Transportfläche 13 auf, die auf der der Grundplatte 4 entfernten Seite der Einschiebeeinrichtung 2 angeordnet ist. Die Förderrichtung A verläuft in der Ebene bzw. parallel zu der Ebene der Transportfläche 13.

Die Einschiebeeinrichtung 2 ist auf Rollen 8, die an den Längsseiten der Einschiebeeinrichtung 2 angeordnet sind, in den Schienen 6 der Grundplatte 4 verschiebbar. Die Einschiebeeinrichtung 2 kann manuell oder automatisch verschoben werden. Die Einschiebeeinrichtung 2 weist einen vorderen Teil 3 auf, dessen Dicke D kleiner ist als die Dicke E des hinteren Teils 45 der Einschiebeeinrichtung 2.

In Förderrichtung A gesehen vor der Einschiebeeinrichtung 2 ist eine Wickeleinrichtung angeordnet, die eine Gabel 21 mit einem freien Ende und zwei Zinken 20, 22 aufweist. Die Zinken 20, 22 weisen einen vorher festgelegten Abstand zueinander auf. Der Höhe des Abstandes wird in Abhängigkeit von der Dicke des Lebensmittels gewählt. Der Höhe des Abstandes ist einstellbar. Die in Ausgangsstellung obere Zinke 20 weist einen bezogenen auf das flache Lebensmittel 24 orthogonal Mindestabstand von der untere Zinke 22 auf. Die Grundplatte 4 verläuft im Wesentlichen parallel zu dem flachen Lebensmittel 24, das auf der Transportfläche 13 angeordnet ist.

Die Wickeleinrichtung weist ferner eine Antriebseinrichtung 16 auf. Die Gabel 21 ist mit Hilfe einer Antriebseinrichtung 16 um eine orthogonal zur Förderrichtung A und parallel zur Transportfläche 13 verlaufenen Achse 19 rotierbar. Ferner kann die Gabel 21 mit Hilfe des Hebels 18 um eine Achse 17 rotiert werden, wobei in diesem Fall die Antriebseinrichtung 16 als Schwenkarm verwendet wird. Die Antriebseinrichtung 16 ist an der Grundplatte 4 befestigt.

Zunächst kann eine Portion einer sich in dem Behälter 42 befindlichen Füllung auf das flache Lebensmittel 24 gegeben werden. Dann wird die Einschiebeeinrichtung 2 gegenüber der Grundplatte 4 in Förderrichtung A derart verschoben, dass der vordere Teil 3 der Einschiebeeinrichtung 2 zwischen die beiden Zinken 20, 22 geschoben wird. Die in Ausgangsstellung untere Zinke 22 ist tiefer als der vordere Teil 3 der Einschiebeeinrichtung 2 und die obere Zinke 20 ist höher als der vordere Teil 3 der Einschiebeeinrichtung 2 angeordnet. Die Einschiebeeinrichtung 2 kann manuell oder automatisch verschoben werden. In Figur 1 ist eine Antriebseinrichtung 40 zur automatischen Verschiebung der Einschiebeeinrichtung 2 dargestellt.

Das Förderband 12 wird, bevor und/oder während die Einschiebeeinrichtung 2 zwischen die Zinken 20, 22 geschoben wird, angetrieben. Das Förderband 12 kann automatisch oder manuell gestartet werden. Die Bewegung des Förderbandes 12 und die Bewegung der Einschiebeeinrichtung 2 können sowohl hinsichtlich der Geschwindigkeit als auch hinsichtlich der Startzeitpunkte der Bewegungen miteinander gekoppelt sein.

So kann das Förderband 12 bei einem automatischen Start beispielsweise dann gestartet werden, wenn die Einschiebeeinrichtung 2 während des Verschiebens in Bezug auf die Grundplatte 4 eine bestimmte Position erreicht hat. Diese Position kann beispielsweise mit Hilfe einer Lichtschranke detektiert werden.

Das flache Lebensmittel 24 wird mit Hilfe des Förderbandes 12 gegenüber der Einschiebeeinrichtung 2 und/oder aufgrund der Verschiebung der Einschiebeeinrichtung 2 in Förderrichtung A transportiert.

Wenn sich der vordere Teil 3 der Einschiebeeinrichtung 2 zwischen den Zinken 20, 22 befindet, stoppt die Bewegung der Einschiebeeinrichtung 2 in Bezug auf die Grundplatte 4. Es kann beispielsweise eine Lichtschranke detektierten, dass sich der vordere Teil 3 der Einschiebeeinrichtung 2 zwischen den Zinken 20, 22 befindet. Die Vorwärtsbewegung der Einschiebeeinrichtung 2 wird daraufhin automatisch gestoppt.

Das Lebensmittel 24 wird dann nur noch aufgrund des Förderbandes 12 in Förderrichtung A fortbewegt. Das Förderband 12 könnte auch erst zu diesem Zeitpunkt gestartet werden.

Das Lebensmittel sollte vorher so auf dem Förderband 12 platziert worden sein, dass es, wenn sich die Einschiebeeinrichtung 2 zwischen den Zinken 20, 22 befindet am vorderen Rand 11 der Einschiebeeinrichtung angelangt ist und von der Einschiebeeinrichtung 2 herunterfällt. Die Einschiebeeinrichtung 2 wird dann mit oder mit einer etwas höheren Geschwindigkeit, mit der sich das Lebensmittel 24 auf dem Förderband 12 in Richtung Förderrichtung A bewegt, in die entgegengesetzte Richtung der Förderrichtung bewegt. Das flache Lebensmittel befindet sich zumindest teilweise zwischen den Zinken 20, 22, während die Einschiebeeinrichtung zurückbewegt wird. Die Zinken 20, 22 werden, sobald sich die Einschiebeeinrichtung 2 außerhalb des Rotationskreises der Gabel 21 befindet, um die Achse 19, die orthogonal zu der Förderrichtung A und parallel zu der Grundplatte 4 verläuft gedreht. Die Drehung der Zinken 20, 22 kann auch schon erfolgen, wenn sich das flache Lebensmittel 24 noch auf der Einschiebeeinrichtung 2 befindet.

Wenn sich die Einschiebeeinrichtung 2 mit der Geschwindigkeit zurückbewegt, mit der sich das Förderband 12 vorwärts bewegt, kann das flache Lebensmittel straff aufgewickelt werden. Auch kann das flache Lebensmittel straff aufgewickelt werden, wenn sich die Einschiebeeinrichtung 2 mit einer höheren Geschwindigkeit zurückbewegt als sich das Förderband 12 vorwärts bewegt. Auch kann die Höhe der Geschwindigkeit, mit der die Einschiebeeinrichtung 2 zurückbewegt wird, langsam, während die Einschiebeeinrichtung 2 zurückbewegt wird, erhöht werden.

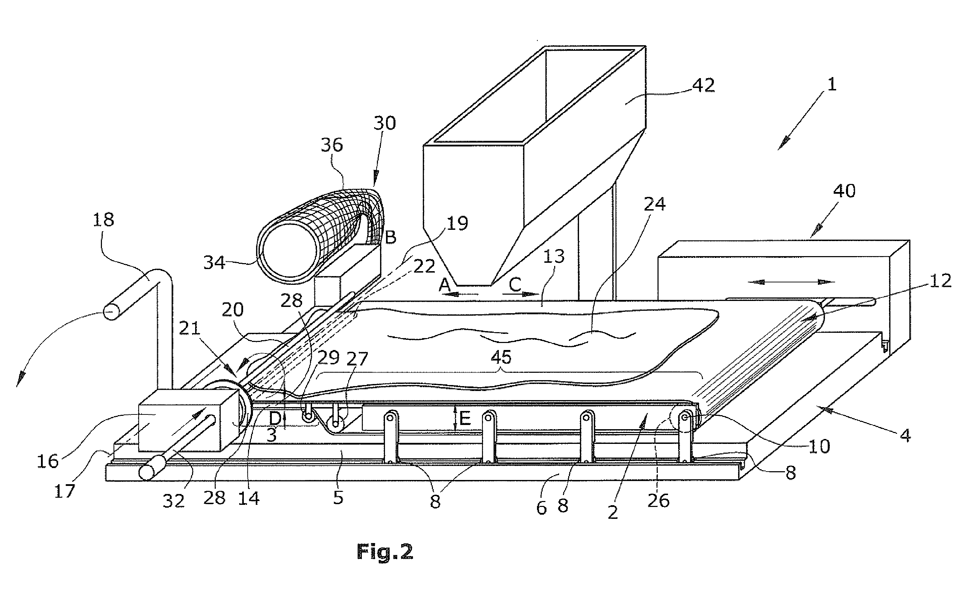

In Figur 2 ist die Position dargestellt, bei der sich die Einschiebeeinrichtung 2 mit dem flachen Lebensmittel 24 zumindest teilweise zwischen den Zinken 20, 22 befindet.

Die Gabel 21 wird zum Aufwickeln des Lebensmittels 24 ca. sechs mal mit Hilfe der Antriebseinrichtung 16 automatisch rotiert. Die Rotationsgeschwindigkeit und/oder der Startzeitpunkt des Aufwickelns kann mit den Geschwindigkeiten und/oder Startzeitpunkten und/oder Endzeitpunkten der Bewegungen der Einschiebeeinrichtung 2 und/oder des Förderbandes 12 gekoppelt sein.

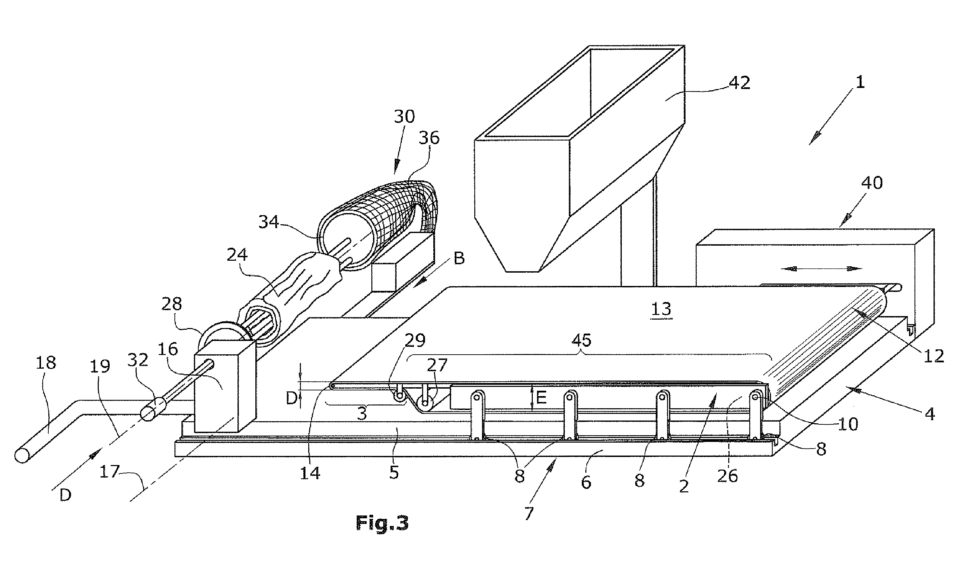

Sobald das flache Lebensmittel 24 aufgewickelt worden ist, wird der Hebel 18 betätigt und die Gabel 21 wird mit der Antriebseinrichtung 16 um die Achse 17 um ca. 90° verschwenkt. Diese verschwenkte Position ist in Figur 3 dargestellt. Die Betätigung des Hebels 18 kann manuell oder auch automatisch erfolgen. Auch der Startpunkt der Betätigung des Hebels 18 und die Rotationsgeschwindigkeit, mit der der Hebel 18 verschwenkt wird, kann mit der Rotationsgeschwindigkeit und/oder dem Startzeitpunkt des Aufwickelns und/oder mit den Geschwindigkeiten und/oder Startzeitpunkten und/oder Endzeitpunkten der Bewegungen der Einschiebeeinrichtung 2 und/oder des Förderbandes 12 gekoppelt sein.

Das aufgewickelte Lebensmittel 24 kann nun beispielsweise in einem Netz 36 verpackt werden. Dazu wird die Verpackeinrichtung 30 verwendet. Die Verpackeinrichtung 30 weist ein Rohr 34 und ein um das Rohr herum angeordnetes schlauchförmiges Netz 36 auf. Die Verpackeinrichtung 30 kann in Richtung B, die orthogonal zu der Förderrichtung A und parallel zu der Transportfläche 13 verläuft, verschoben werden. Die Verpackeinrichtung 30 wird derart verschoben, dass das Rohr 34, dessen Innendurchmesser F größer ist als der Außendurchmesser des um die Gabel 21 herum aufgewickelten Lebensmittels 24, über das aufgewickelte Lebensmittel 24 geschoben wird.

Das freie Ende des Netzes 36 befindet sich nun auf der der Antriebseinrichtung 16 zugewandten Seite des aufgewickelten Lebensmittels 24. Das Netz 36 kann an den Enden des aufgewickelten Lebensmittel 24 zusammengebunden werden. Es kann aber auch sein, dass das schlauchförmige Netz 36 aus elastischem Material besteht und einen solchen Schlauchdurchmesser aufweist, dass das Netz 36 um das aufgewickeltem Lebensmittel 24 gespannt und so mit diesem verbunden wird. Nun wird das Rohr 34 wieder in die entgegen der Richtung B zurückbewegt. Sobald sich das aufgewickelte Lebensmittel 24 außerhalb des Rohres 34 befindet und vollständig mit dem Netz 36 umgeben ist, wird der nicht zum Verpacken des aufgewickelten Lebensmittels 24 benötigte Teil des schlauchförmigen Netzes 36 abgeschnitten und gegebenenfalls zusammengebunden. Auf diese Weise wird das Lebensmittel 24 in dem Netz 36 eingepackt. Es wird nun die Ausstoßeinrichtung 32 betätigt, wodurch das aufgewickelte Lebensmittel von der Gabel 21 heruntergestoßen wird.

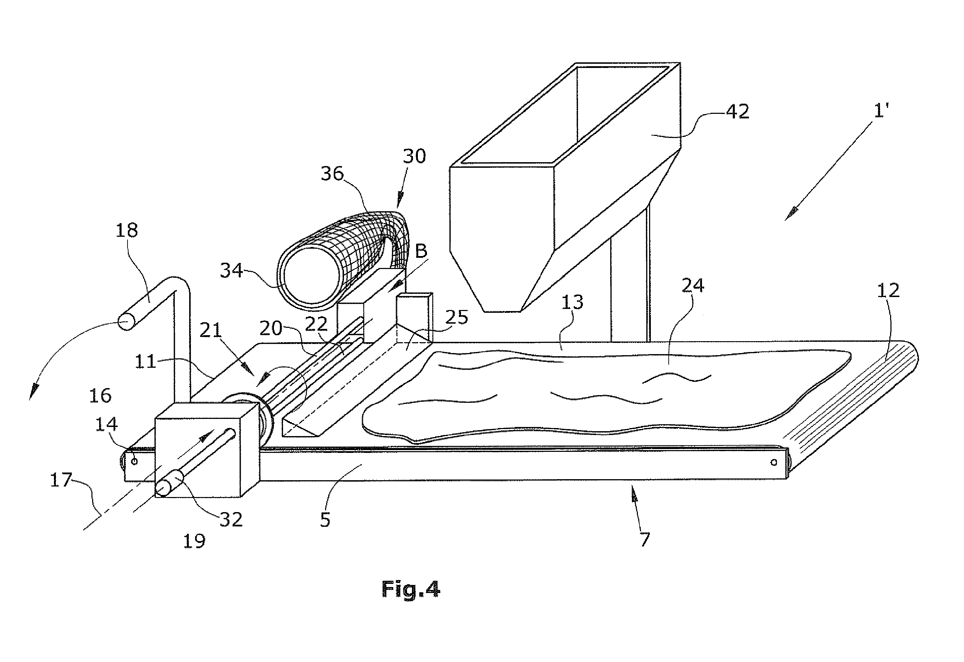

Figur 4 zeigt ein zweites Ausführungsbeispiel der vorliegenden Erfindung. Der Unterschied zum ersten Ausführungsbeispiel besteht darin, dass die Transporteinrichtung 7 lediglich eine Grundplatte 4 aufweist, die ein Förderband 12 aufweist. Das flache Lebensmittel 24 wird auf dem Förderband 12 zu der Gabel 21 transportiert. Die beiden Zinken 20, 22 der Gabel 21 befinden sich oberhalb des Förderbandes 12. In Förderrichtung A gesehen vor der Gabel 21 befindet sich eine Rampe 25, die bewirkt, dass das flache Lebensmittel 24 über die Rampe 25 bewegt wird und dadurch zwischen den beiden Zinken 20, 22 transportiert wird. Das Förderband 12 wird gestoppt, wenn sich das flache Lebensmittel 24 zumindest teilweise zwischen den Zinken 20, 22 befindet. Dass sich die das flache Lebensmittel 24 zumindest teilweise zwischen den Zinken 20, 22 befindet, kann mit Hilfe einer Lichtschranke detektiert werden.

Die Rampe 25 ist, hier nicht dargestellt an einer der Längsseiten 5 der Grundplatte 4 befestigt.

Die Gabel 21 wird dann um die Achse 19 ca. sechs mal rotiert und dann oder während dessen in die obere Stellung geschwenkt. In der oberen Stellung wird das aufgewickelte Lebensmittel 24 mit dem Netz 36 verpackt.

Die Rampe 25 ist entweder außerhalb des Rotationskreises der Gabel 21 angeordnet oder die Gabel 21 rotiert erst um die Achse 19, wenn die Gabel derart verschwenkt worden ist, dass die Rampe 25 sich nicht mehr im Rotationskreis der Gabel 21 befindet. Alternativ kann die Rampe 25 auch verschoben werden, nachdem sich das Lebensmittel 24 zwischen den Zinken 20, 22 befindet, so dass sich die Rampe 25 nicht mehr im Rotationskreis der Gabel 21 befindet.

Zwischen dem sich auf der Transportfläche 13 befindlichen Lebensmittel 24 und der Transportfläche 13 tritt während des Wickelns Reibung auf, die entgegen der Förderrichtung A wirkt, so dass das Lebensmittel 24 straff aufgewickelt werden kann. Es kann auch vorgesehen sein, dass das Förderband 12 eine raue Oberfläche aufweist.

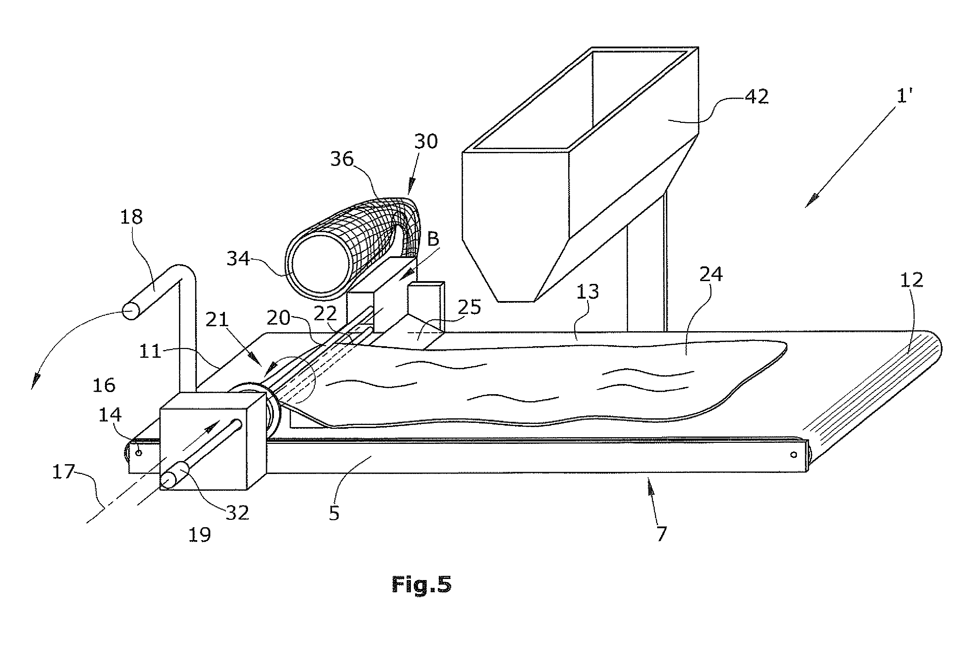

Figur 5 zeigt die Position, in der das flache Lebensmittel zumindest teilweise zwischen den Zinken 20, 22 liegt.

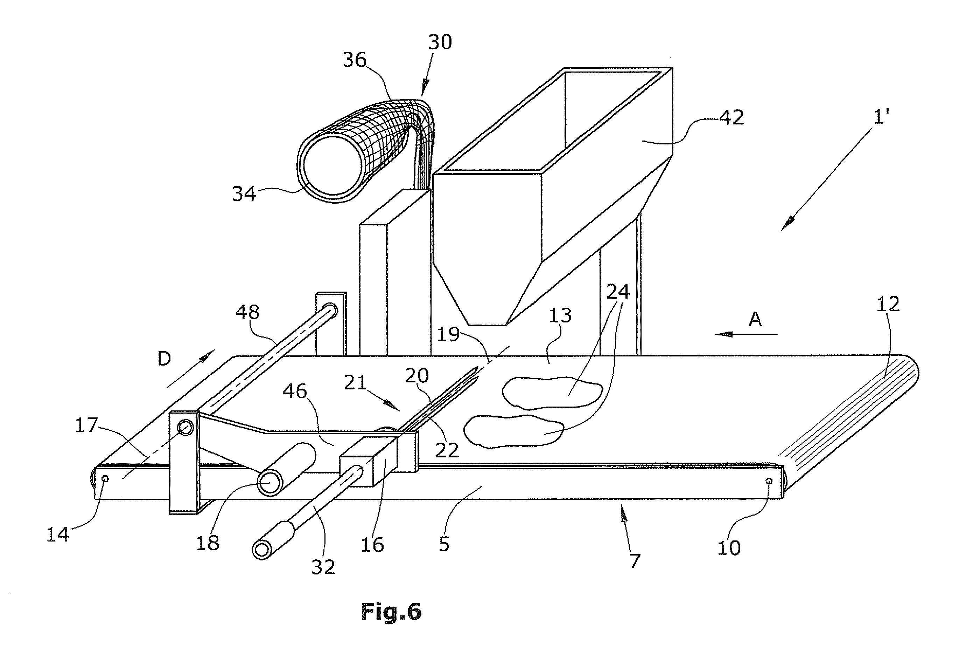

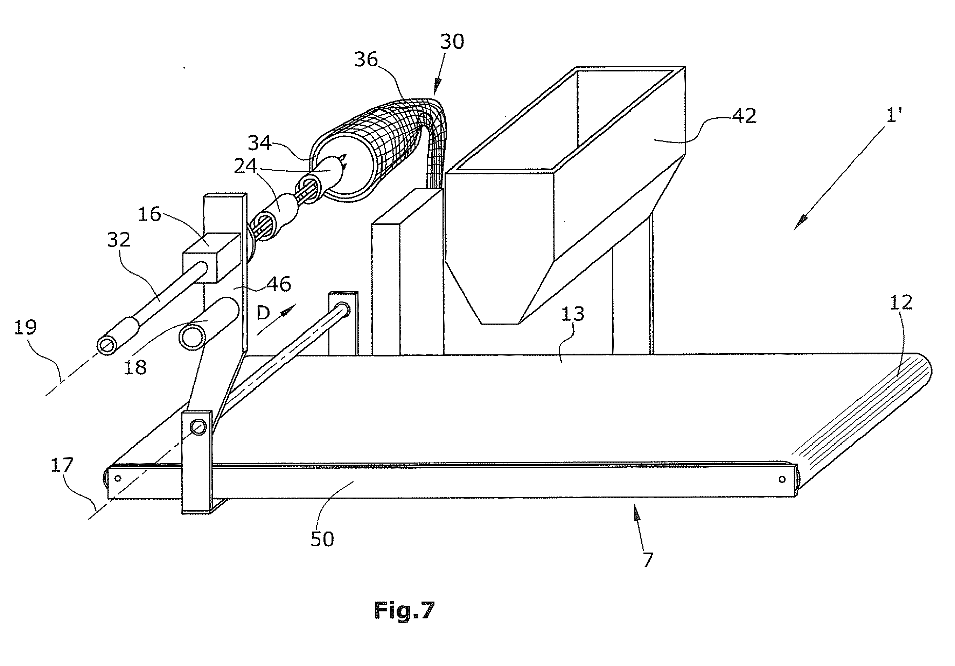

Figuren 6 und 7 zeigen ein drittes Ausführungsbeispiel der vorliegenden Erfindung. Das Ausführungsbeispiel ist dem zweiten Ausführungsbeispiel sehr ähnlich. Die Gabel 21 mit den Zinken 20 und 22 befindet sich ebenfalls oberhalb der Transportfläche 13. Die untere Zinke 22 der Gabel 21 liegt auf der Transportfläche 13 auf. Die in Ausgangsstellung obere Zinke 20 weist einen bezogen auf das flache Lebensmittel 24 orthogonalen Mindestabstand von der unteren Zinke 22 auf. Der orthogonale Mindestabstand ist größer als die Dicke des aufzuwickelnden Lebensmittels 24.

In den Figuren 6 und 7 sind zwei flache Lebensmittel 24 in Förderrichtung A nebeneinander auf der Transportfläche 13 angeordnet.

Die aufzuwickelnden Lebensmittel 24 werden mittels des Förderbandes 12 in Förderrichtung A zu der Wickeleinrichtung bestehend aus Gabel 21 und Antriebseinrichtung 16 transportiert. Sobald die aufzuwickelnden Lebensmittel 24 an der Gabel 21 angekommen sind, werden die aufzuwickelnden Lebensmittel 24 von der unteren Zinke 22 von der Transportfläche 13 abgelöst, so dass die aufzuwickelnden Lebensmittel 24 zumindest teilweise zwischen die beiden Zinken 20, 22 transportiert werden können. Die in Ausgangsstellung untere Zinke 22 weist einen solchen Durchmesser auf, dass sich die aufzuwickelnden Lebensmittel 24 leicht von der Transportfläche 13 ablösen lassen.

Bei dem dritten Ausführungsbeispiel kann alternativ eine Rampe 25, wie im zweiten Ausführungsbeispiel dargestellt, vorgesehen werden, die die aufzuwickelnden Lebensmittel 24 von der Transportfläche 13 ablöst, damit die aufzuwickelnden Lebensmittel 24 zwischen die beiden Zinken 20,22 transportiert werden können. Es versteht sich, dass die Rampe 25 beim zweiten Ausführungsbeispiel auch weggelassen werden kann und anstelle dessen genauso wie im dritten Ausführungsbeispiel die untere Zinke 22 das flache Lebensmittel 24 von der Transportfläche 13 ablöst.

Sobald sich zumindest ein Teil der aufzuwickelnden Lebensmittel 24 zwischen den Zinken 20,22 befindet, stoppt das Förderband 12 und die aufzuwickelnden Lebensmittel 24 werden, wie bereits bei dem ersten und zweiten Ausführungsbeispiel beschrieben, aufgewickelt. Die Gabel 21 wird zum Aufwickeln um die Achse 19 rotiert.

Die Gabel 21 ist um die Achse 17 schwenkbar. Die Gabel 21 kann automatisch verschwenkt werden. Die Gabel 21 wird während des Aufwickelns zumindest soweit verschwenkt, dass sich das Förderband 12 außerhalb des Rotationskreises der Gabel 21 mit aufgewickeltem Lebensmittel 24 befindet. Alternativ kann die Gabel 21 mit dem Lebensmittel während des Wickelns auf dem Förderband 12 aufliegen. Die Gabel 12 wird dann dadurch verschwenkt, dass auf die Gabel 21 beim Wickeln des Lebensmittels 24 eine Kraft dadurch ausgeübt wird, dass der Durchmesser des Lebensmittels 24 beim Aufwickeln größer wird.

Beim dritten Ausführungsbeispiel ist die Antriebseinheit 16 nicht als Schwenkarm ausgebildet. Die Vorrichtung 1 weist statt dessen einen Schwenkarm 46 auf, an dessen freien Ende auf der dem Förderband 12 zugewandten Seite die Gabel 21 und auf der dem Förderband 12 abgewandten Seite die Antriebseinrichtung 16 angeordnet ist.

Alternativ könnte jedoch auch die Antriebseinrichtung 16 so wie in dem ersten und zweiten Ausführungsbeispiel als Schwenkarm ausgebildet sein.

Die Gabel 21 kann, wie in den Figuren 6 und 7 dargestellt, durch Betätigung des Hebels 18 mit dem Schwenkarm 46 um die Achse 17 verschwenkt werden.

Der Schwenkarm 46 kann in eine parallel zu der Transportfläche 13 und orthogonal zu der Förderrichtung A verlaufenden Richtung D verschoben werden. Der Schwenkarm 46 wird entlang der Stange 48 verschoben, die sich in Richtung D erstreckt.

Nachdem die Gabel 21 um nahezu 90° verschwenkt worden ist, wird der Schwenkarm 46 mit Gabel 21 in Richtung D verschoben, um die aufgewickelten Lebensmittel 24 in das Rohr 34 einzuschieben. Die aufgewickelten Lebensmittel 24 werden dann, wie bereits in dem ersten und zweiten Ausführungsbeispiel beschrieben, mit dem Netz 36 verpackt.

Es versteht sich, dass bei allen Ausführungsbeispielen die flachen Lebensmittel 24 vor dem Wickeln mit einer Füllung, die sich in dem Behälter 42 befindet, belegt werden können.

Der Startpunkt der Betätigung des Hebels 18 und die Rotationsgeschwindigkeit, mit der der Hebel 18 und damit die Gabel 21 um die Achse 17 verschwenkt wird, kann mit der Rotationsgeschwindigkeit und/oder dem Startzeitpunkt des Aufwickelns und/oder mit der Geschwindigkeit und/oder dem Startzeitpunkt und/oder Endzeitpunkt der Bewegungen des Förderbandes 12 gekoppelt sein.

Auch kann das Förderband 12 während des Wickelns weiterbewegt werden, sofern die Gabel 21 mit einer solchen Rotationsgeschwindigkeit aufgewickelt wird, dass die Bewegung, die die noch nicht aufgewickelten Teile der flachen Lebensmittel 24 aufgrund der Rotation entlang der Transportfläche 13 in Richtung A ausführen, größer ist als die Fördergeschwindigkeit des Förderbandes 12.

In Fig. 7 ist die Gabel 21 in hochgeschwenkter Position dargestellt.

## Patentansprüche

1. Aufwickelvorrichtung (1) für flache, wickelfähige Lebensmittel (24), mit
- einer Transporteinrichtung (7) zum Zuführen des Lebensmittels (24) zu einer Wickeleinrichtung, die um eine orthogonal zur Förderrichtung (A) und parallel zur Transportfläche (13) einer Transporteinrichtung (7) verlaufenden Achse (19) rotierbar ist,
**dadurch gekennzeichnet,**
**dass** die Wickeleinrichtung mindestens eine Gabel (21) mit einem freien Ende und mit zwei Zinken (20,22) aufweist, die einen vorbestimmten bzw. voreingestellten Abstand zueinander aufweisen, wobei die obere Zinke (20) in Ausgangsstellung einen bezogen auf das flache Lebensmittel (24) orthogonalen Mindestabstand von der unteren Zinke (22) aufweist, der größer als die Dicke des Lebensmittels (24) ist.

2. Aufwickelvorrichtung (1) nach Anspruch 1, **dadurch gekennzeichnet, dass** die zwei Zinken (20,22) zum freien Ende der Gabel (21) konisch zunehmenden Abstand voneinander haben.

3. Aufwickelvorrichtung (1) nach Anspruch 1 oder 2, **dadurch gekennzeichnet, dass** die Transporteinrichtung (7) eine Grundplatte (4) und eine Einschiebeeinrichtung (2) aufweist, wobei die Einschiebeeinrichtung (2) in Bezug auf die Grundplatte (4) in und entgegen der Förderrichtung (A) verschiebbar ist.

4. Aufwickelvorrichtung (1) nach Anspruch 3, **dadurch gekennzeichnet, dass** die Einschiebeeinrichtung (2) automatisch oder manuell verschiebbar ist.

5. Aufwickelvorrichtung (1) nach Anspruch 3 oder 4, **dadurch gekennzeichnet, dass** die Einschiebeeinrichtung (2) als Transportfläche (13) mindestens ein Förderband (12) aufweist.

6. Aufwickelvorrichtung (1) nach einem der Ansprüche 3 bis 5, **dadurch gekennzeichnet, dass** die Einschiebeeinrichtung (2) zumindest teilweise zwischen die obere und die untere Zinke (20,22) einschiebbar ist.

7. Aufwickelvorrichtung (1) nach einem der Ansprüche 3 bis 6, **dadurch gekennzeichnet, dass** der orthogonale Mindestabstand zwischen oberer und unterer Zinke (22) größer ist als die gemeinsame Dicke des Lebensmittels (24) und des zwischen obere und untere Zinke (20,22) einschiebbaren Teils der Einschiebeinrichtung.

8. Aufwickelvorrichtung (1) nach einem der Ansprüche 1 bis 7, **dadurch gekennzeichnet, dass** eine Ausstoßeinrichtung (32) das aufgewickelte Lebensmittel (24) von der Gabel (21) abschiebt.

9. Verfahren zum Aufwickeln von flachen Lebensmittel (24) **gekennzeichnet durch**
- Auflegen eines Lebensmittels (24) auf eine eine Transportfläche (13) aufweisende Transporteinrichtung (7),
- Transportieren des Lebensmittels (24) mittels der Transporteinrichtung (7) zwischen eine Gabel (21) mit zwei Zinken (20,22) zum Aufwickeln des Lebensmittels (24), wobei eine Gabel (21) mit einem vorbestimmten bzw. voreingestellten Abstand der Zinken (20,22) zueinander verwendet wird und wobei für die Ausgangsstellung die obere Zinke (20) auf einen bezogen auf das flache Lebensmittel (24) orthogonalen Mindestabstand von der unteren Zinke (22) eingestellt wird, der zumindest größer als die Dicke des Lebensmittels (24) ist,
- Rotieren der Gabel (21) um eine orthogonal zur Förderrichtung (A) und parallel zur Transportfläche (13) verlaufenden Achse (19), wobei das Lebensmittel (24) dabei straff auf die Gabel (21) aufgewickelt wird.

10. Verfahren nach Anspruch 9, **dadurch gekennzeichnet, dass** das Lebensmittel (24) ca. 5 bis 6 mal rotiert wird.

11. Verfahren nach Anspruch 9 oder 10, **dadurch gekennzeichnet, dass** das Lebensmittel (24) vor dem Rotieren automatisch belegt wird.

12. Verfahren nach einem der Ansprüche 9 bis 11, **dadurch gekennzeichnet, dass** das Lebensmittel (24) nach dem Rotieren ausgestoßen wird.

13. Verfahren nach Anspruch 12, **dadurch gekennzeichnet, dass** das Lebensmittel (24) nach dem Ausstoßen in ein Netz (36) verpackt wird.
